# EUROPÄISCHE PATENTSCHRIFT

(11) **EP 2 876 409 B1**
(45) Veröffentlichungstag und Bekanntmachung des Hinweises auf die Patenterteilung: **12.06.2019**
(21) Anmeldenummer: 14173532.4
(22) Anmeldetag: 23.06.2014
(51) Int. Cl.: G01B 13/10, B24B 33/08

(54) **Messeinheit zum Messen von Bohrungen**
Measuring unit for measuring drilled holes
Unité de mesure destinée à mesurer des forages

(30) Priorität: 25.11.2013 DE 102013223986
(43) Veröffentlichungstag der Anmeldung: 27.05.2015
(73) Patentinhaber: Nagel Maschinen- und Werkzeugfabrik GmbH, 72622 Nürtingen (DE)
(72) Erfinder: Nagel, Bernd, 72622 Nürtingen (DE); Rauscher, Herbert, 72555 Metzingen (DE); Hodza, Erkan, 71679 Asperg (DE)
(74) Vertreter: Patentanwälte Ruff, Wilhelm, Beier, Dauster & Partner mbB

(56) Entgegenhaltungen:
- EP-A2- 0 047 652
- WO-A1-2012/041264
- DE-A1- 4 024 778
- DE-A1-102010 020 931
- GB-A- 698 439

## Beschreibung

### ANWENDUNGSGEBIET UND STAND DER TECHNIK

Die Erfindung betrifft eine Messeinheit zum Vermessen der Geometrie einer Bohrung gemäß dem Oberbegriff von Anspruch 1.

Ein bevorzugtes Anwendungsgebiet ist die messungsunterstützte Feinbearbeitung von Bohrungen durch Innenhonen und/oder Feinbohren, wobei nach der Feinbearbeitung eine Messung zur Bestimmung der Makroform der Bohrung, insbesondere eine Innendurchmessermessung, durchgeführt wird.

Das Honen ist ein Zerspanungsverfahren mit geometrisch unbestimmten Schneiden, bei dem vielschneidige Honwerkzeuge eine aus zwei Komponenten bestehende Schnittbewegung ausführen, die zu einer charakteristischen Oberflächenstruktur der bearbeiteten Innenfläche führt, in der Regel mit überkreuzten Bearbeitungsspuren. Durch Honen sind endbearbeitete Oberflächen herstellbar, die extrem hohen Anforderungen bezüglich Maß- und Formtoleranzen sowie hinsichtlich der Oberflächenstruktur genügen. Dementsprechend werden beispielsweise beim Motorenbau Zylinderlaufflächen, d.h. Innenflächen von Zylinderbohrungen in einem Motorblock oder in einer in einen Motorblock einzubauenden Zylinderhülse, und Lagerflächen für Wellen einer Honbearbeitung unterzogen.

Beim Honen sind in der Regel sehr enge Toleranzvorgaben hinsichtlich der Makroform und der z.B. durch den Bohrungsdurchmesser quantifizierten Größe der Bohrung einzuhalten.

Ob durch einen Honprozess die gewünschte Makroform im Rahmen der Toleranzen erreicht wurde, wird in der Regel nach Abschluss des Honprozesses in einer gesonderten Nachmessstation (Post-Prozess-Messstation) durch Vermessen der Geometrie der Bohrung mit Hilfe einer Messeinheit (Nachmesseinheit) bestimmt. Für diesen Zweck bekannte Messeinheiten haben einen in die Bohrung einführbaren pneumatischen Messdorn, der mindestens ein Paar von Messdüsen aufweist, die bezogen auf eine Längsmittelachse des Messdorns in einem diametralen Abstand zueinander angeordnet sind.

Pneumatische Messdorne arbeiten nach dem Düse-Prallplatte-Prinzip. Für die Messung wird Druckluft aus den Messdüsen in Richtung Bohrungswandung geblasen. Der sich ergebende Staudruck im Bereich der Messdüsen dient als Maß für den Abstand der Messdüse zu Bohrungswandung. Ein mit der Messdüse über eine Druckleitung verbundener Messwandler sorgt für eine Umwandlung des (pneumatischen) Drucksignals in ein elektrisch weiterverarbeitbares Spannungssignal. Mittels zweier diametral gegenüberliegender Messdüsen kann bei einem gegebenen diametralen Abstand zwischen den Messdüsen der Bohrungsdurchmesser ermittelt werden.

Pneumatische Messdorne ermöglichen ein berührungsloses, vom Werkstoff des Messobjekts unabhängiges Messen und im Rahmen ihres Messbereichs hohe Messgenauigkeiten, die im Falle von Nachmesseinheiten in der Regel deutlich unterhalb eines Mikrometers liegen, beispielsweise im Bereich von 0,2 µm bis 0,3 µm bei wiederholter Messung. Um Messwerte mit der erforderlichen Messgenauigkeit aufnehmen zu können, müssen die Messdüsen in einem relativ eng begrenzten Abstandsbereich von der Bohrungswandung angeordnet sein. Bei zu großem Messabstand ist der elektrische Signalverlauf zwischen Minimalwert und Maximalwert nicht mehr nur linear, sondern wird zu den Minimal- und Maximalgrenzen hin logarithmisch. Das bedeutet, dass die Messung nicht mehr mit der erforderlichen Messgenauigkeit durchgeführt werden kann. Auch zu geringe Messabstände sind problematisch. Daher kann jeder pneumatische Messdorn nur einen kleinen Durchmesserbereich mit hoher Messgenauigkeit abdecken.

Daher werden bei Feinbearbeitungsanlagen, die flexibel ggf. für relativ kleine Serien von Werkstücken mit unterschiedlichen Bohrungsdurchmessern genutzt werden sollen, an der Nachmesseinheit mehrere unterschiedlich dimensionierte Messdorne für unterschiedliche, jeweils relativ enge Durchmesserbereiche vorgehalten und es sind ggf. relativ häufige Wechsel der für die Messung verwendeten Messdorne erforderlich.

Die EP 0 483 402 A1 zeigt ein Verfahren und eine Vorrichtung zum Messen der Geometrie von Bohrungen mit Hilfe pneumatischer Messdorne. Durch besondere Maßnahmen für die Eichung der Messdorne soll dabei erreicht werden, dass ein schneller Austausch von im Durchmesser unterschiedlichen Messdornen möglich wird.

Die DE 44 13 645 A1 zeigt eine Vorrichtung zur Honbearbeitung von Bohrungen mit unterschiedlichen Nenndurchmessern, die eine Messeinheit mit einem in die Bohrung einfahrbaren pneumatischen Messdorn aufweist. Zum Nachjustieren der pneumatischen Messeinrichtung ist eine Referenzlehre vorgesehen, die stufenlos auf unterschiedliche Nenndurchmesser einstellbar ist.

Die DE 40 24 778 A1 beschreibt ein Hon-Messwerkzeug, das Bearbeitungsglieder in Form von Honleisten aufweist, ggf. aber auch ohne Bearbeitungsglieder arbeiten kann. Eine Zeichnungsfigur zeigt ein Funktionsglied mit einer Messdüse eines pneumatischen Messsystems. Es ist eine Verstelleinrichtung zur stufenlosen Verstellung des Messwerkzeugs vorgesehen. Die Verstelleinrichtung hat einen Verstellmotor, mit dem die radiale Position der Funktionsglieder geändert werden kann. Der Verstellmotor bewirkt eine axiale Verschiebung eines linear verschiebbaren Stellgliedes mit einem Verstellkonus.

Die WO 2012/041264 A1 zeigt ein hydraulisch betätigbares Honwerkzeug, das z.B. in einem Bearbeitungszentrum verwendet werden kann. Beschrieben wird u.a. eine Variante mit einem pneumatischen Messsystem, das Messleisten aufweist, deren radiale Lage dem Durchmesser des Werkstücks angepasst werden kann.

Die DE 42 25 281 A1 zeigt ein Messgerät für Bohrungsdurchmesser. Das Messgerät hat Zentrierfinger, die Messelemente tragen und mittels eines gemeinsamen Betätigungsorgans in gleichem Maße und gleichzeitig radial verstellbar sind, um das Gerät auf verschiedene Bohrungsdurchmesser einzustellen.

Die GB 1 067 269 A zeigt ein Messgerät mit zwei diametral gegenüberliegende Messdüsen mit Öffnungen, deren diametraler Abstand durch axiale Verstellung eines Konus verändert werden kann. Das Messgerät kann mit Hilfe eines Meisterteils bekannten Durchmessers voreingestellt werden, bevor es in die zu messende Bohrung eingebracht wird.

Es besteht Bedarf an einer kostengünstigen Möglichkeit, Bohrungen unterschiedlicher Durchmesser schnell und mit hoher Messgenauigkeit messen zu können.

Die Patentschrift GB 698439 A beschreibt eine pneumatische Messvorrichtung zur Messung des Durchmessers von Bohrungen unterschiedlicher Durchmesser. Die Messvorrichtung hat verstellbare Messköpfe, deren radiale Position bezüglich der Achse der Messvorrichtung eingestellt werden kann. Dazu werden die Messköpfe in Längsrichtung gegenüber einem zentralen konischen Körper verstellt.

Die europäische Patentanmeldung EP 0 047 652 A2 beschreibt ein Honwerkzeug, bei dem im Inneren des Werkzeugkörpers ein axial verschiebbarer Verstellkonus zur radialen Verstellung von Honleisten vorgesehen ist. An der spindelseitigen Stirnseite des Verstellkonus ist ein Gewindestift eingeschraubt, zum Sichern dieser Schraubverbindung ist die Schraubverbindung mit Hilfe einer auf den Gewindestift laufenden Mutter gekontert.

Die Offenlegungsschrift DE 10 2010 020 931 A1 beschreibt eine Vorrichtung zum kombinierten Feindrehen und Honen einer zylindrischen Bohrung. Die Vorrichtung kann entweder nur zustellbare Honleisten oder auch während der Bearbeitung zustellbare Schneidplatten aufweisen. Um den Durchmesser der zu bearbeitenden Zylinderbohrung während der Bearbeitung zu erfassen und die Bearbeitung in Abhängigkeit des Durchmessers der Zylinderbohrung steuern zu können, sind in dem Grundkörper der Vorrichtung eine oder mehrere Messdüsen angeordnet, die in axialer Richtung etwa auf Höhe der Honleisten angeordnet sind, so dass sowohl während des Langhubhonens als auch während eines eventuellen Kurzhubhonens der von den Honleisten erreichte Durchmesser der Zylinderbohrung während der Bearbeitung erfasst und zur Steuerung des Bearbeitungsvorgangs eingesetzt werden kann.

### AUFGABE UND LÖSUNG

Es ist eine Aufgabe der Erfindung, eine Messeinheit der gattungsgemäßen Art bereitzustellen, mit deren Hilfe Bohrungen unterschiedlicher Durchmesser schnell und mit hoher Messgenauigkeit gemessen werden können. Insbesondere soll dadurch eine schnellere und wirtschaftlichere Fertigung an flexibel nutzbaren Honanlagen ermöglicht werden.

Zur Lösung dieser Aufgabe stellt die Erfindung eine Messeinheit mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei einer Messeinheit gemäß der beanspruchten Erfindung ist eine mittels eines Verstellmotors betätigbare Verstelleinrichtung zur stufenlosen Verstellung des diametralen Abstandes der Messdüsen vorgesehen. Der diametrale Abstand der Messdüsen, der auch als Messdurchmesser des pneumatischen Messdorns bezeichnet werden kann, kann dadurch in Abhängigkeit vom erwarteten Nenndurchmesser der zu vermessenden Bohrungen jeweils so eingestellt werden, dass das pneumatische Messsystem im Bereich hoher Messgenauigkeit von weniger als 1 µm zuverlässig arbeiten kann.

Der Begriff "Messdorn" soll im Rahmen dieser Anmeldung ein reines Messwerkzeug bezeichnen, das insbesondere im Rahmen der Nachmessung gehonter Bohrungen eingesetzt werden kann und hierzu eine Messgenauigkeit von deutlich weniger als 1 µm haben soll. Beispielsweise kann die Messgenauigkeit bei wiederholter Messung im Bereich von 0,2 µm bis 0,3 µm liegen. Insoweit unterscheidet sich ein pneumatischer Messdorn beispielsweise von Honwerkzeugen, die ein integriertes Luftmesssystem mit auf die Bohrungswandung gerichteten Messdüsen aufweisen, um im Rahmen einer pneumatischen Maßsteuerung das aktuelle Bohrungsmaß während des Materialsabtrags zu ermitteln und bei Erreichen des vorgegebenen Fertigmaßes die Abschaltung der Honmaschine über die Steuerung der Honmaschine zu initiieren. Solche pneumatischen Messsysteme zur Abschaltsteuerung haben typischerweise Abschaltgenauigkeiten in der Größenordnung einiger Mikrometer, beispielsweise zwischen 3 µm und 5 µm.

Der Messdorn kann ein einziges Paar von Messdüsen aufweisen. Dadurch ist ein einfacher, robuster Aufbau möglich. Es ist auch möglich, dass der Messdorn zwei oder mehr Paare von Messdüsen aufweist, z.B. um Messungen in unterschiedliche Diametralrichtungen und/oder in unterschiedlichen axialen Lagen ohne zwischenzeitliche Bewegung des Messdorns in der Bohrung durchführen zu können.

Um Messungen mit hoher Absolutgenauigkeit bezüglich des Innendurchmessers der Bohrung zu ermöglichen, sollte der diametrale Abstand der Messdüsen bzw. ein dazu proportionales Maß möglichst genau zu ermitteln sein. Dazu ist jede der Messdüsen an einem gesonderten Messdüsenträger angeordnet, der in einem Grundkörper des Messdorns radial zur Längsmittelachse verschiebbar gelagert und durch Aktivierung des Verstellantriebs mittels der Verstelleinrichtung radial verschiebbar ist. Der Verstellantrieb sollte weitestgehend spielfrei mit den Messdüsenträgern gekoppelt sein.

Zur Erzeugung der radialen Verstellbewegungen der Messdüsenträger hat die Verstelleinrichtung einen axial verstellbaren Verstellkonus mit mindestens einem Konusabschnitt, und die Messdüsenträger haben an einer dem Verstellkonus zugewandten Innenseite Schrägflächen, die mit dem Konusabschnitt nach Art eines Keilantriebs zusammenwirken. Auf diese Weise bewirkt eine axiale Verschiebung des Verstellkonus eine radiale Verschiebung der Messdüsenträger.

Der axiale Vorschub des Verstellkonus könnte über eine axiale Bewegung eines damit gekoppelten Zustellelementes bewirkt werden. Bei der beanspruchten Erfindung weist die Verstelleinrichtung jedoch einen Gewindetrieb mit einer durch den Verstellantrieb rotierend antreibbaren Spindel und einer auf der Spindel laufende Spindelmutter auf. Der Gewindetrieb ist dazu vorgesehen, die Drehbewegung der Spindel in eine axiale Bewegung des Verstellkonus umzuwandeln. Hierdurch ist eine äußerst präzise, weitestgehend spielfreie Verstellung möglich.

Die Umwandlung der Drehung der Spindel in eine axiale Bewegung des Verstellkonus ist auf unterschiedliche Weisen realisierbar. Bei einer Ausführungsform ist die Spindelmutter relativ zum Grundkörper beweglich, während der Verstellkonus ausschließlich axial verschiebbar ist. Die Spindelmutter kann hierzu drehfest mit dem Verstellkonus verbunden sein. Bei einer anderen Ausführungsform ist die Spindelmutter fest mit dem Grundkörper verbunden, während der Verstellkonus gegenüber der Spindelmutter sowohl drehbar als auch axial beweglich ist. Bei dieser Variante ist der axialen Verstellbewegung des Verstellkonus eine Drehung des Verstellkonus um seine Achse überlagert. Dadurch ist eine besonders feinfühlige Verstellung möglich. Die Spindel kann drehfest mit einem gesonderten Verstellkonus verbunden sein. Es ist auch möglich, dass die Spindel und der Verstellkonus durch dasselbe Bauteil gebildet werden, also in einem Bauteil integriert sind. Hierdurch kann die Präzision der Verstellung weiter verbessert werden.

Es hat sich als vorteilhaft herausgestellt, wenn eine (mindestens) Feder vorgesehen ist, die auf die Spindelmutter und/oder auf die Spindel eine parallel zur Spindel gerichtete Federkraft ausübt. Dadurch kann jegliches Spiel aus dem Gewindetrieb herausgedrückt werden, so dass kein toter Gang bei Drehrichtungsumkehr auftritt. Die Feder ist bei bevorzugten Ausführungsbeispielen als Druckfeder ausgelegt, die die Spindel mindestens mit einem Abschnitt umschließt. Dadurch wird vermieden, dass die Feder auf die Spindelmutter ein Kippmoment ausübt, welches die Leichtgängigkeit des Gewindetriebes verschlechtern könnte.

Um eine möglichst reibungsarme Umwandlung einer Drehbewegung der Spindel in eine Axialbewegung der Spindelmutter zu erreichen, kann der Gewindetrieb als Kugelgewindetrieb ausgebildet werden. Häufig ist es jedoch gewünscht, dass eine einmal eingestellte Verstellposition sich bei Einwirkung äußerer Kräfte nicht unbeabsichtigt ändert. Daher ist bei manchen Ausführungsformen vorgesehen, dass die Gewindespindel ein Feingewinde aufweist, das mit einem Feingewinde der Spindelmutter im Bereich der Selbsthemmung zusammenwirkt. Dadurch wird eine eingestellte Verstellposition sicher gehalten und ändert sich nur dann, wenn der Verstellantrieb betätigt wird. Gewindesteigungen im Bereich von 0.5 mm bis 2 mm haben sich hierzu als besonders geeignet erwiesen.

Die Spindelmutter kann aus Stahl bestehen und ggf. einstückig mit dem Grundkörper als mit Innengewinde versehenen Teil desselben ausgelegt sein. Vorzugsweise ist die Spindelmutter aus einem Nichteisenmetall gefertigt, z.B. aus einer Bronze-Legierung. Dadurch können die Notlaufeigenschaften des Gewindetriebs verbessert werden, so dass eine feinfühlige Verstellung auch bei schlechter Schmierung gewährleistet ist.

Um im Bereich der für den Keilantrieb zusammenwirkenden Schrägflächen Spielfreiheit in beide radialen Verstellrichtungen zu erzielen, ist bei bevorzugten Ausführungsformen jedem der Messdüsenträger mindestens eine als Druckfeder ausgelegte Rückstellfeder zugeordnet, die den Messdüsenträger in Richtung des Verstellkonus vorspannt. Hierdurch werden die Messdüsenträger jederzeit mit ausreichend hoher Kraft an die Schrägflächen des Verstellkonus angedrückt, so dass die Axialposition des Verstellkonus unmittelbar die Radialposition der Messdüsenträger vorgibt. Vorzugsweise ist eine zu einer Bewegungsrichtung des Messdüsenträgers symmetrisch wirkende Rückstellfeder-Anordnung vorgesehen, insbesondere mit Rückstellfedern an gegenüberliegenden Seites des Messdüsenträgers. Durch eine in Umfangsrichtung betrachtet beidseitige Anordnung von Rückstellfedern oder eine andere, symmetrisch wirkende Anordnung kann vermieden werden, dass durch die Rückstellkraft ein Kippmoment auf die Messdüsenträger ausgeübt wird. Dadurch wird eine leichtgängige radiale Verschiebung der Messdüsenträger ohne Verkanten begünstigt.

Bei bevorzugten Ausführungsformen weist der Verstellantrieb einen Servomotor auf. Dieser sollte weitestgehend spielfrei mit den Messdüsenträgern gekoppelt sein. Ein Servomotor der hier betrachteten Art ist mit einer Messeinrichtung zur genauen Erfassung der Rotorposition des Servomotors ausgestattet, die die aktuelle Drehposition des Motors beispielsweise in Form eines zurückgelegten Drehwinkels bezüglich einer Anfangsposition bestimmt. Ein entsprechender Drehgeber, der beispielsweise als Inkrementalgeber oder Absolutwertgeber ausgestaltet sein kann, erzeugt ein Gebersignal, das an die Steuerung des Verstellantriebs übertragen werden kann. Durch die spielfreie Kopplung zwischen Servomotor und Messdüsenträgern kann daraus die radiale Position der Messdüsenträger bzw. der davon getragenen Messdüsen exakt ermittelt werden. Zusammen mit den pneumatischen Messsignalen, die den radialen Abstand zwischen den Messdüsen und der Bohrungsinnenwand präsentieren, ist dadurch eine exakte Durchmessermessung möglich.

Es wäre auch möglich, zur Bestimmung des diametralen Abstands der Messdüsen ein vom Verstellantrieb gesondertes Längenmesssystem zu nutzen.

Um das Einführen des Messdorns in die zu vermessende Bohrung zu erleichtern, ist bei manchen Ausführungsformen ein Führungssystem mit mehreren um den Umfang des Messdorns verteilten, radial zustellbaren Führungsleisten vorgesehen. Durch die radiale Verstellbarkeit ist eine Anpassung an unterschiedliche Bohrungsdurchmesser leicht möglich. Es ist möglich, die Führungsleisten an den Außenseiten der Messdüsenträger vorzusehen, so dass die Messdüsenträger auch als Träger für Führungsleisten dienen. Bei manchen Ausführungsformen sind die Führungsleisten als von den Messdüsenträgern gesonderte Führungsleisten ausgelegt und somit mechanisch von diesen entkoppelt. Die Führungsleisten sind vorzugsweise in Umfangsrichtung zwischen Messdüsenträgern angeordnet. Auf diese Art und Weise können die Funktionen "Messen" und "Führen" getrennt werden. Kräfte, die sich beispielsweise beim Einfahren des Messdorns in eine Bohrung durch Berührungskontakte zwischen Führungsleisten und Bohrungseingang oder Bohrungsinnenwand ergeben, können sich auf diese Weise nicht negativ auf die Lage bzw. Position der Messdüsen und die Messgenauigkeit auswirken.

Vorzugsweise sind die Führungsleisten an Führungsleistenträgern befestigt, die an einer dem Verstellkonus zugewandten Innenseite Schrägflächen aufweisen, welche mit einem Konusabschnitt des Verstellkonus nach Art eines Keilantriebs zusammenwirken. Eine axiale Verschiebung des Verstellkonus bewirkt somit eine synchrone radiale Verschiebung von Führungsleisten und Messdüsenträgern. Um eine Verkippung der Führungsleisten beim radialen Zustellen zu vermeiden, ist bei manchen Ausführungsformen vorgesehen, dass jeder der Führungsleistenträger zwei mit axialem Abstand zueinander angeordnete Schrägflächen aufweist, die mit axial zueinander versetzten Konusabschnitten des Verstellkonus zusammenwirken. Hierdurch kann eine Parallelverschiebung der Führungsleisten in Radialrichtung sichergestellt werden.

Bei manchen Ausführungsformen hat jeder der Führungsleistenträger mindestens einen zylindrischen Kolbenabschnitt, der im Wesentlichen spielfrei in einer zylindrischen Kolbenaufnahmebohrung im Grundkörper des Messdorns geführt ist. Vorzugsweise sind zwei mit axialem Abstand zueinander angeordnete, mechanisch verbundene Kolbenabschnitte vorgesehen, welche an ihren Innenseiten die oben genannten Schrägflächen zum Zusammenwirken mit dem Verstellkonus aufweisen können. Bei diesem Konzept wird zur Führung der Radialbewegung der Führungsleistenträger eine Gleitlageranordnung mit zylindrischen Gleitlagerflächen vorgeschlagen, nämlich der Innenfläche der Kolbenaufnahmebohrung und der Außenfläche des Kolbenabschnitts. Diese Flächen können mit etablierten Oberflächenbearbeitungsverfahren (beispielsweise Honen oder Finishen) präzise bearbeitet werden, so dass eine quasi spielfreie und dennoch ausreichend leichtgängige Gleitlagerpaarung geschaffen werden kann.

Obwohl die Messdüsenträger einen rechteckigen oder in anderer Weise polygonalen Querschnitt (z.B. Dreikant- oder Sechskantquerschnitt) haben können, ist bei bevorzugten Ausführungsformen vorgesehen, dass die Messdüsenträger teilweise oder vollständig als zylindrische Kolben (mit kreisförmigem Querschnitt) ausgeführt sind, die im Wesentlichen spielfrei in kreiszylindrischen Kolbenaufnahmebohrungen im Grundkörper des Messdorns geführt sind. Auch hier wird durch die Kombination zylindrischer Gleitflächen an der Innenseite der Kolbenaufnahmebohrung bzw. an der Außenseite eines Kolbens oder Kolbenabschnitts ein weitgehend spielfreies Gleitlager geschaffen, welches eine leichtgängige Radialbewegung eines Messdüsenträgers ohne Verkanten erlaubt. Derartige Messdüsenträger zeichnen sich somit durch minimales Axialspiel und minimalen Kippeffekt aus. Zudem sind sie bei Wartungsarbeiten oder zur Anpassung des Messdorns an unterschiedliche Messdurchmesser relativ einfach austauschbar und können mit unterschiedlichen Längen gefertigt und vorgehalten werden.

Bei allen Ausführungsformen kann eine automatisch betätigbare Klemmeinrichtung vorgesehen sein, die dafür konfiguriert ist, die Messdüsenträger und/oder ein anderes Element der Verstelleinrichtug nach Erreichen einer gewünschten Verstellposition in dieser Position durch Klemmung festzulegen, so dass ein unbeabsichtigte Verstellung vermieden werden kann. Beispielsweise kann eine Hydrodehn-Klemmeinrichtung vorgesehen sein, um zylindrische Elemente der Messdüsenträger kraftschlüssig festzulegen.

Bei allen Ausführungsformen kann ein von dem pneumatischen Messsystem unabhängiges, innenliegendes Blasluftsystem mit Luftkanälen vorgesehen sein, die von einem Blasluftanschluss zu einer oder mehreren Blasluftdüsen am Umfang des Messdorns führen. Dadurch kann bei Bedarf die Messstelle vor der Durchführung der Messung pneumatisch gereinigt werden.

Weiterhin kann bei einigen oder allen Ausführungsformen ein innenliegendes Kühlsystem mit Fluidkanälen vorgesehen sein, die von einem Fluidanschluss zu Kühlfluid-Auslassöffnungen am Umfang des Messdorns führen. Hierdurch ist es möglich, bei Bedarf die Messung und durch Zufuhr von Kühlfluid unter thermisch genau definierten Bedingungen durchzuführen.

Gegebenenfalls kann ein in den Messdorn integrierter Temperatursensor vorgesehen sein, um die Temperatur möglichst nahe am Messort erfassen und bei der Bewertung der Messergebnisse berücksichtigen zu können.

Der verstellbare Messdorn muss für die Messung in die zu vermessende Bohrung eingeführt werden. Die Einführbewegung verläuft vorzugsweise axial bzw. parallel zur Bohrungsachse, insbesondere etwa koaxial mit dieser. Um mit der Messeinheit ohne konstruktive Änderungen unterschiedlich große und unterschiedlich tiefe bzw. lange Bohrungen messen zu können, ist bei bevorzugten Ausführungsformen eine mit dem Messdorn verbundene rohrförmige Verlängerungsstange vorgesehen, die ein im Inneren der Verlängerungsstange angeordnetes, drehbares Verstellelement aufweist, welches über eine drehbare Kupplung mit der Spindel des Gewindetriebs verbunden ist, wobei zwischen der Verlängerungsstange und dem Messdorn eine Schwingkopfanordnung angeordnet ist. Hierdurch wird erreicht, dass der Messdorn gegenüber der Verlängerungsstange in beliebige Richtungen senkrecht zur Mittellängsachse des Messdorns schwimmen kann. Dadurch kann ein Axialversatz zwischen der Achse der Verlängerungsstange und der Bohrungsachse bei Bedarf ausgeglichen werden, so dass der Messdorn auch bei ungünstiger Anordnung der Verlängerungsstange zur Bohrung zentrisch in der Bohrung angeordnet werden kann. Der Verstellantrieb kann an der dem Messdorn abgewandten Seite des Verstellelements angreifen und außerhalb des Messdorns bzw. der Bohrung angeordnet sein.

Die Ankopplung des Verstellantriebs an die zur Verstelleinrichtung gehörenden Teile innerhalb des pneumatischen Messdorns sollte möglichst so erfolgen, dass über diesen Antriebsstrang keine Zwangskräfte auf die Position des Messdorns relativ zur Verlängerungsstange ausgeübt werden. Hierzu ist bei bevorzugten Ausführungsformen vorgesehen, dass das Verstellelement an einem dem Messdorn abgewandten Ende ein Antriebselement aufweist, welches in der Verlängerungsstange drehbar gelagert ist, dass an einem dem Messdorn zugewandten Ende ein Abtriebselement vorgesehen ist, das in einem mit dem Messdorn gegenüber der Verlängerungsstange schwimmend gelagerten Element der Schwimmkopfanordnung drehbar gelagert ist, und dass zwischen dem Antriebselement und dem Abtriebselement ein Zwischenstück angeordnet ist, wobei zwischen dem Antriebselement und dem Zwischenstück ein erstes Gelenk und zwischen dem Zwischenstück und dem Abtriebselement ein zweites Gelenk angeordnet ist. Hierdurch ergibt sich eine doppelt-gelenkige Kopplung zwischen dem Verstellantrieb und dem mit dem Messdorn schwimmenden Abtriebselement, so dass Schwimmbewegungen des Messdorns relativ zur Verlängerungsstange durch die Elemente des Antriebsstrangs der Verstelleinrichtung nicht behindert werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
Fig. 1 eine Seitenansicht einer ersten Ausführungsform einer pneumatischen Messeinheit zum Vermessen der Geometrie von Bohrungen;
Fig. 2 eine Verlängerungsstange der in Fig. 1 gezeigten Messeinheit;
Fig. 3 einen Längsschnitt durch den pneumatischen Messdorn der Messeinheit; und
Fig. 4 einen Querschnitt durch den Messdorn aus Fig. 3;
Fig. 5 eine Seitenansicht einer zweiten Ausführungsform einer pneumatischen Messeinheit zum Vermessen der Geometrie von Bohrungen;
Fig. 6 eine Schrägperspektive der zweiten Ausführungsform des Messdorns;
Fig. 7 einen Axialschnitt durch eine Ebene mit zwei diametral gegenüberliegenden Messdüsenträgern, und
Fig. 8 einen Axialschnitt durch eine Ebene mit zwei diametral gegenüberliegenden Führungsleistenträgern.

### DETAILLIERTE BESCHREIBUNG DER AUSFÜHRUNGSBEISPIELE

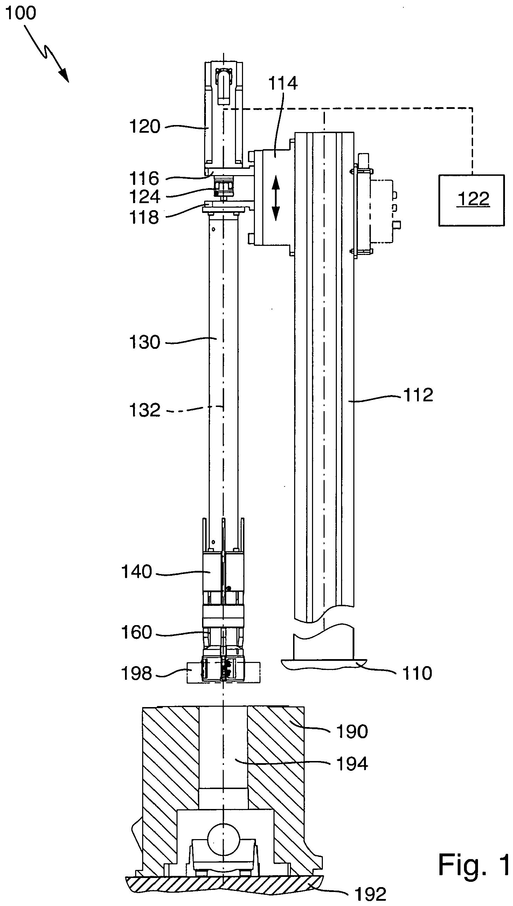

Die Übersichtsdarstellung in Fig. 1 zeigt eine pneumatische Messeinheit 100 gemäß einer ersten Ausführungsform der Erfindung. Die Messeinheit kann zur Messung von Innendurchmessern in Durchgangsbohrungen oder Sacklochbohrungen verwendet werden. Im Beispielsfall ist die Messeinheit dafür konzipiert, im Zusammenhang mit der Honbearbeitung von Bohrungen in einem Werkstück 190 in einer Nachmessoperation eine exakte Innendurchmesserbestimmung gehonter Bohrungen nach Abschluss der Honbearbeitung durchzuführen. Die Messeinheit ist hierzu Bestandteil einer Messstation, die in die Honmaschine integriert ist. Eine Integration in eine von einer Bearbeitungsmaschine gesonderte Messstation ist ebenfalls möglich.

Die Messeinheit ist mit einem im Durchmesser verstellbaren pneumatischen Messdorn 160 ausgestattet und erlaubt die Prüfung von Innendurchmessern unterschiedlich großer Bohrungen mit sehr geringen systematischen Messabweichungen und hoher Wiederholpräzision. Mit demselben Messdorn können Bohrungen aus einem Durchmesserbereich von bis zu 12 mm Unterschied zwischen kleinster und größter messbarer Bohrung präzise vermessen werden. Die Messgenauigkeit liegt bei wiederholter Messung im Bereich von weniger als 0,5 µm liegt, insbesondere im Bereich zwischen 0,2 µm und 0,3 µm.

Die an Messeinheit 100 hat eine vertikale Säule 112, die an einer horizontal verfahrbaren Komponente 110 der Honmaschine fest montiert ist. Die Säule 112 trägt einen vertikal verfahrbaren Schlitten 114, der entlang von Linearführungen geführt und in unterschiedlichen Höhen an der Säule fixiert werden kann.

An der Vorderseite des Schlittens ist eine horizontal abstehende obere Halteplatte 116 montiert, die einen elektrischen Servomotor 120 trägt, der als Verstellantrieb 120 zur stufenlosen Verstellung des Messdurchmessers der Messeinheit bzw. des Messdorns 160 dient. Der Servomotor 120 ist mit vertikaler Ausrichtung der Drehachse seines Rotors an der Halteplatte 116 befestigt und elektrisch an eine Steuereinrichtung 122 der Messeinheit angeschlossen. Die aktuelle Rotorposition wird mit einem integrierten Drehgeber erfasst und an die Steuereinrichtung übermittelt, über die die Drehposition des Rotors exakt vorgegeben werden kann. An der Abtriebsseite des Rotors ist unterhalb der Halteplatte 116 ein antriebsseitiges Kupplungselement 124 zum Anschluss eines später noch näher erläuterten Antriebselements einer Verstelleinrichtung angebracht.

Unterhalb dieses Kupplungselementes ist am Schlitten 114 eine untere horizontale Halteplatte 118 montiert, an deren Unterseite eine rohrförmige Verlängerungsstange 130 mit vertikaler Ausrichtung ihrer Längsmittelachse 132 fest montiert ist.

Im unteren Endbereich der Verlängerungsstange befindet sich eine Schwimmkopfanordnung 140, die derart konstruiert ist, dass ein am unteren freien Ende der Verlängerungsstange angebrachter Kupplungsabschnitt 146 zum Ankuppeln des pneumatischen Messdorns 160 in einer senkrecht zur Längsmittelachse 132 der Verlängerungsstange ausgerichteten Ebene in alle Richtung begrenzt schwimmen kann.

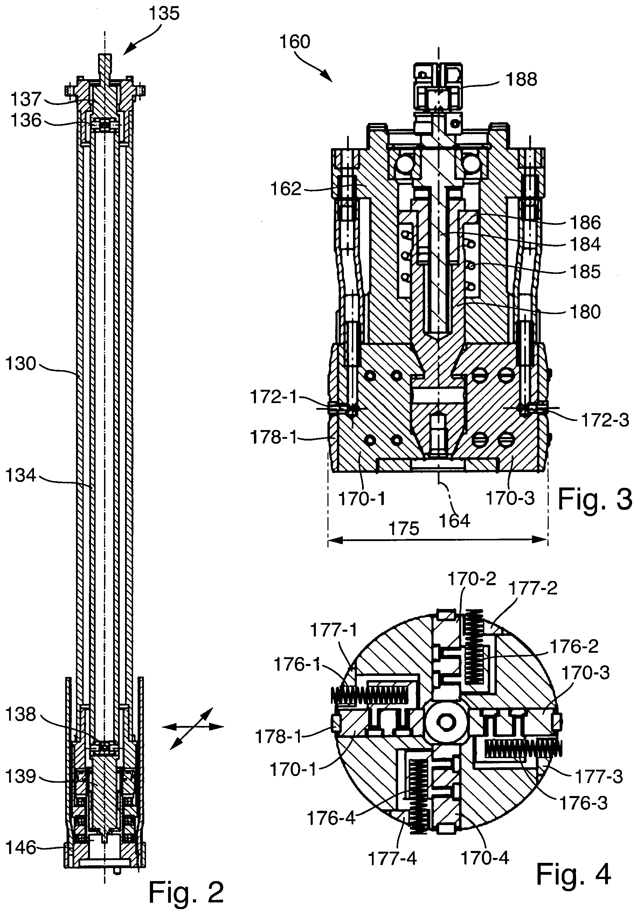

Bei fertig montierter Messeinheit ist am unteren Kupplungsabschnitt 146 der in den Fig. 3 und 4 im Detail dargestellte verstellbare pneumatische Messdorn 160 befestigt, welcher somit gegenüber der Verlängerungsstange senkrecht zu deren Längsmittelachse 132 in alle Richtungen begrenzt verschoben werden kann.

Das Werkstück ist im Beispielsfall ein Zylinderkurbelgehäuse bzw. Motorblock einer Brennkraftmaschine. Die Innenflächen der darin ausgebildeten Zylinderbohrungen sollen gehont und auf eine definierte Sollform mit vorgegebenem Durchmesser gebracht werden. Das Werkstück ist vertikal unterhalb des Verstellmotors 120 auf einem Werkstückhalter 192 aufgespannt, der an seiner Oberseite eine werkstückangepasste Kontur hat, um das zu vermessende Werkstück 190 mit fester Position und Orientierung so aufnehmen zu können, dass die Längsmittelachse der im Werkstück ausgebildeten Bohrung 194 vertikal ausgerichtet ist und im Wesentlichen mit der Längsmittelachse 132 der Verlängerungsstange fluchtet.

Für die Durchmessermessung wird der Messdorn 160 zunächst oberhalb der zu vermessenden Bohrung positioniert und dann durch vertikales Verfahren des Schlittens 114 nach unten in die Bohrung von oben eingeführt. Oberhalb des Werkstücks kann ein Kalibrierring 198 angebracht sein, der eine koaxial zur Bohrung des Werkstücks liegende Bohrung mit exakt bekanntem Innendurchmesser hat, um eine Kalibrierung des Messdorns zeitnah zur Messung am Werkstück durchführen zu können.

Der in Fig. 3 im Längsschnitt und in Fig. 4 im Querschnitt gezeigte pneumatische Messdorn 160 hat einen aus Stahl gefertigten Grundkörper 162, der eine Längsmittelachse 164 definiert und eine zentrische Durchgangsbohrung aufweist. Der Grundkörper ist im betriebsfertig montierten Zustand fest mit dem am unteren Ende der Verlängerungsstange angebrachten Kupplungsabschnitt 146 gekoppelt. Im antriebsabgewandten unteren Bereich des Grundkörpers sind vier radial zur Längsmittelachse 164 ausgerichtete, rechteckförmige Führungsöffnungen ausgespart, die jeweils um 90° umfangsversetzt zueinander liegen. In diese Führungsöffnungen sind plattenförmige Messdüsenträger 170-1 bis 170-4 eingesetzt, die jeweils in Umfangsrichtung und in Radialrichtung weitgehend spielfrei in ihren Führungsöffnungen sitzen und radial verschiebbar sind.

Jeder der Messdüsenträger trägt an seiner radialen Außenseite eine radial ausgerichtete Messdüse 172-1 bis 172-4, die über Kanäle innerhalb des Messdüsenträgers sowie weitere Kanalabschnitte und Schlauchabschnitte und über einen pneumatischen Messwandler mit einer nicht dargestellten Druckluftquelle verbunden ist.

Ein Führungssystem des Messdorns hat zwei Paare mit jeweils diametral einander gegenüberliegenden Führungsleisten 178-1 etc., die an den radialen Außenseiten der Messdüsenträger 170-1 etc. befestigt und über radiale Zustellung der Messdüsenträger gemeinsam mit den Messdüsen radial verschoben werden können.

Der diametrale Abstand von diametral gegenüberliegenden Messdüsen wird hier als Messdurchmesser 175 bezeichnet und kann mit Hilfe einer Verstelleinrichtung, deren Elemente vom Verstellmotor 120 bewegt werden können, stufenlos mit hoher Präzision eingestellt werden. Zur Verstelleinrichtung gehört ein Verstellkonus 180, der koaxial zur Längsmittelachse des Messdorns in der Durchgangsbohrung des Grundkörpers axial verschiebbar angeordnet ist und im axialen Bereich der Messdüsenträger zwei axial versetzte Konusabschnitte aufweist, die mit korrespondierenden Schrägflächen an den Innenseiten der Messdüsenträger nach Art eines Keilantriebs so zusammenwirken, dass eine axiale Verschiebung des Verstellkonus in Richtung des freien Endes des Messdorns eine symmetrische radiale Verschiebung der Messdüsenträger nach außen bewirkt. Bei entgegengesetzter Bewegung werden die Messdüsenträger nach innen bewegt.

Die axiale Verschiebung des Verstellkonus wird über einen Gewindetrieb erreicht, der eine im Grundkörper drehbar gelagerte Gewindespindel 184 aufweist, auf der eine Spindelmutter 186 läuft, die am Verstellkonus befestigt ist. Um die Reibung in diesem Gewindetrieb zu minimieren, ist der Gewindetrieb als Kugelgewindetrieb ausgebildet. Am oberen Ende der Spindel 184 befindet sich außerhalb des Grundkörpers eine Kupplungseinrichtung 188 zum Ankoppeln der Spindel an externe Elemente der Verstelleinrichtung.

Um sicherzustellen, dass jede Drehbewegung der Spindel 184 unabhängig von der Drehrichtung ohne toten Gang in eine Radialbewegung der Messdüsenträger bzw. der Messdüsen umgesetzt wird, sind besondere konstruktive Maßnahmen getroffen. Wie in Fig. 4 gut zu erkennen, ist an jedem Messdüsenträger an einer Seite ein Lagerelement angebracht, in welchem eine Druckfeder 176-1 bis 176-4 untergebracht ist, die sich einerseits an dem Lagerelement und andererseits radial außen an einem Gegenelement 177-1 bis 177-4 abstützt, welches fest am Grundkörper 162 montiert ist. Dadurch ist jeder der Messdüsenträger separat mittels der ihm zugeordneten Druckfeder nach radial innen in Richtung auf den Verstellkonus 180 vorgespannt, wodurch bei jeder Axialstellung des Verstellkonus jegliches Spiel im Bereich der Konusabschnitte bzw. Schrägflächen herausgedrückt wird.

Weiterhin ist der Verstellkonus 180 nach oben, d.h. in Richtung Rückzug der Messdüsenträger vorgespannt. Hierzu ist in einer Aussparung des Grundkörpers eine Spiraldruckfeder 185 untergebracht, die sich einerseits am Grundkörper und andererseits an einem Ringbund der Spindelmutter 186 axial abstützt, um die Spindelmutter in Achsrichtung fest an die Gewindegänge der Spindel bzw. die darin umlaufenden Kugeln zu drücken. Da die Spiraldruckfeder 185 die Spindelmutter symmetrisch umgibt, wirkt diese Federkraft im Wesentlichen koaxial zur Längsmittelachse 164, ohne dass Kippmomente auf die Spindelmutter ausgeübt werden. In Kombination sorgen die Druckfedern der Messdüsenträger und die dem Gewindetrieb zugeordnete Druckfeder für ein absolut spielfreies Zusammenspiel der innerhalb des Messdorns angebrachten Elemente der Verstelleinrichtung ohne jeglichen toten Gang. Hierdurch kann eine hohe Präzision der Durchmessereinstellung erzielt werden.

Bei der Messeinheit befindet sich der Verstellmotor 120, der die Durchmesserverstellung des Messdorns bewirkt, mit relativ großem Abstand entfernt vom Messdorn 160. Zur Übertragung der Rotation des Rotors des Servomotors auf die im Messdorn untergebrachte Spindel 184 des Gewindetriebs sind Übertragungselemente vorgesehen, welche eine spielfreie Übertragung der Drehbewegung ermöglichen, ohne gleichzeitig eine eventuelle Schwimmbewegung des Messdorns relativ zur Verlängerungsstange zu behindern.

Zu diesen Übertragungselementen gehört ein mehrgliedriges, doppelt-gelenkiges Verstellelement 135, das überwiegend im Inneren der Verlängerungsstange 130 untergebracht und gegenüber dieser drehbar ist. Das Verstellelement umfasst ein rohrförmiges drehbares Zwischenstück 134, welches motorseitig über ein erstes Gelenk 136 mit einem motorseitigen Antriebselement 137 und auf der Seite des Messdorns 160 über ein zweites Gelenk 138 mit einem Abtriebselement 139 gekoppelt ist. Das motorseitige Antriebselement 137 ist in einem fest mit der Verlängerungsstange 130 verbundenen Lagerelement drehbar gelagert. Das messdornseitige Abtriebselement 139 ist dagegen in der Schwimmkopfanordnung 140 gelagert, welche sich relativ zur Verlängerungsstange 130 in Richtung senkrecht zu deren Längsachse 132 bewegen kann. Durch die doppel-gelenkige Kopplung des motorseitigen Antriebselementes 137 mit dem messdornseitigen Abtriebselement 139 ist eine Schwimmbewegung des Messdorns ohne Ausübung von Zwangskräften durch die der Verstelleinrichtung zugeordneten Übertragungselemente sichergestellt.

Bei der Messeinheit kann der diametrale Abstand 175 gegenüberliegender Messdüsen aufgrund der Konstruktion stufenlos mit hoher Präzision eingestellt werden. Dadurch ist es möglich, den Messdorn schnell und präzise für die Messung von Bohrungen mit unterschiedlichen Durchmessern so umzustellen, dass die Messdüsen jeweils in demjenigen optimalen Messabstand zur Innenwand der Bohrung liegen, bei dem die pneumatische Messung mit höchster Präzision möglich ist. Um dabei die absolute Größe des Innendurchmessers präzise bestimmen zu können, ist es erforderlich, den jeweils eingestellten Messdurchmesser, d.h. den diametralen Abstand einander gegenüberliegender Messdüsen, genau zu kennen. Dies wird bei der Messeinheit dadurch erreicht, dass die verstellwirksamen Elemente der Verstelleinheit (Messdüsenträger, Verstellkonus, Spindel des Gewindetriebs, drehbares Verstellelement in der Verlängerungsstange) spielfrei mit dem Rotor des Servomotors gekoppelt sind, dessen Drehstellung wiederum über den im Servoantrieb eingebauten Drehgeber jederzeit exakt bestimmt werden kann. Somit ist das Drehgebersignal unmittelbar proportional zum jeweils eingestellten Messdurchmesser. Schließlich wird durch die gewählte Konstruktion mit der Möglichkeit einer lateralen Schwimmbewegung des Messdorns gegenüber der Verlängerungsstange erreicht, dass auch bei nicht völlig exakter Ausrichtung zwischen Werkstück und Verstellmotor eine möglichst zentrische Anordnung des Messdorns innerhalb der zu vermessenden Bohrung und damit hochgenaue Messergebnisse möglich sind.

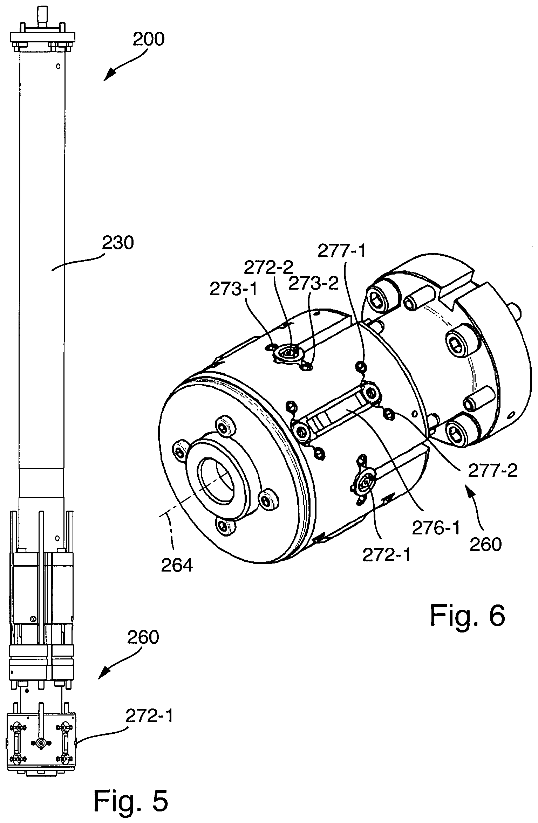

Anhand der Fig. 5 bis 8 werden nun einige Besonderheiten einer zweiten Ausführungsform einer pneumatischen Messeinheit 200 erläutert. Zu dieser gehört ein pneumatischer Messdorn 260, der genau wie der Messdorn der ersten Ausführungsform an das untere Ende einer Verlängerungsstange 230 angekoppelt werden kann. Funktional gleiche oder ähnliche Bauelemente der zweiten Ausführungsform werden, wo möglich, mit den gleichen Bezugszeichen wie bei der ersten Ausführungsform, erhöht um 100, bezeichnet. Die Messeinheit bzw. der Messdorn erreicht die gleiche Messgenauigkeit wie das erste Ausführungsbeispiel und kann für die gleichen Anwendungsfälle vorgesehen sein. Insoweit wird auf die vorherige Beschreibung verwiesen.

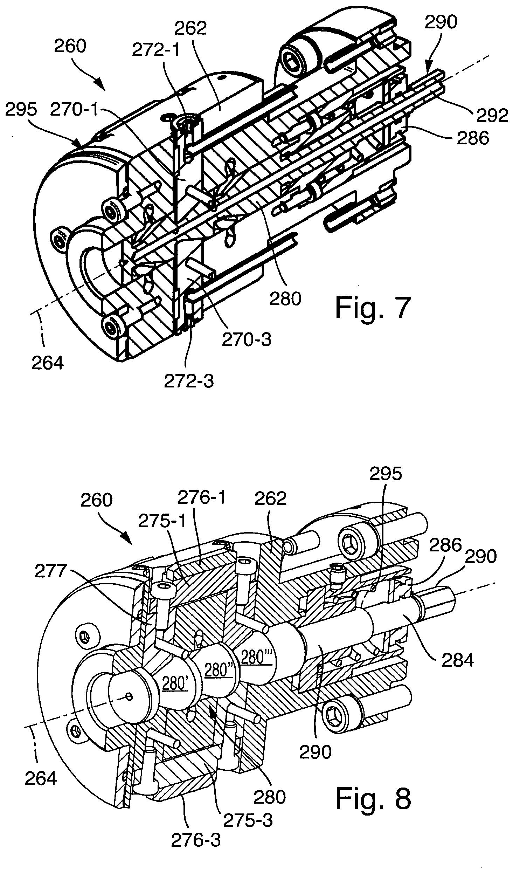

Bei dem Messdorn 260 sind diejenigen Elemente, die der Führung des Messdorns in der zu vermessenden Bohrung dienen, mechanisch von denjenigen Elementen entkoppelt, die der Messung des Bohrungsdurchmessers dienen. Es sind vier um jeweils 90° umfangsversetzte Messdüsen 272-1, 272-2, 272-3 etc. vorgesehen, die jeweils paarweise diametral gegenüberliegend angeordnet sind. Jede der Messdüsen ist am äußeren Ende eines Messdüsenträgers 270-1, 270-2 etc. angebracht, der im Wesentlichen die Form eines zylindrischen Kolbens hat. Fig. 7 zeigt hierzu einen Axialschnitt durch eine die Längsmittelachse 264 enthaltende Ebene mit zwei diametral gegenüberliegenden Messdüsenträgern 270-1, 270-3, die in einer gemeinsamen Axialebene liegen. Die kolbenartigen Messdüsenträger sind in radialen Kolbenaufnahmebohrungen im Grundkörper 262 des Messdorns radial beweglich und in Axialrichtung praktisch spielfrei geführt.

Das Führungssystem des Messdorns hat zwei Paare mit jeweils diametral einander gegenüberliegenden Führungsleisten 276-1, 276-3 etc., die an den radialen Außenseiten von Führungsleistenträgern 275-1 etc. befestigt und über radiale Zustellung der Führungsleistenträger radial verschoben werden können. Fig. 8 zeigt hierzu einen Axialschnitt durch eine Ebene mit zwei diametral gegenüberliegenden Führungsleistenträgern 275-1, 275-3, die in einer gemeinsamen Axialebene liegen. Die Führungsleisten sind jeweils in Umfangsrichtung mittig zwischen benachbarten Messdüsen angebracht und von diesen mechanisch entkoppelt. Durch diese Konstruktion sind die Funktionen "Messen" und "Führen" voneinander getrennt. Wenn somit der Messdorn bei einem leichten lateralen Versatz zwischen Messdornachse und Bohrungsachse in eine zu vermessende Bohrung eingeführt wird, so können die Führungsleisten zunächst am Bohrungsrand anschlagen und dadurch den Messdorn zentrieren, ohne dass die dabei auftretenden Kräfte auf die Messdüsen bzw. Messdüsenträger wirken. Die auftretenden Kräfte werden direkt über die Führungsleisten aufgenommen und beeinträchtigen die Lage der Messdüsen und damit die Messgenauigkeit nicht.

Die Führungsleisten werden synchron mit den Messdüsen über axiale Verschiebung des dreifach-konischen Verstellkonus 280 verstellt. Die Führungsleistenträger 275-1 etc. haben hierzu zwei mit axialem Abstand zueinander angeordnete und mechanisch über ein Verbindungsglied verbundene zylindrische Kolbenabschnitte 277, die in radialen, zylindrischen Kolbenaufnahmebohrungen im Grundkörper des Messdorns radial beweglich und axial im Wesentlichen spielfrei geführt sind. An den Innenseiten der Kolbenabschnitte sind Schrägflächen ausgebildet, die jeweils mit einem Konusabschnitt des Verstellkonus nach Art eines Keilantriebs zusammenwirken. Durch die Führung der Führungsleisten an zwei axial voneinander getrennten Positionen ist eine Parallelverschiebung ohne Verkippung der Führungsleisten sichergestellt.

Wie in den Fig. 7 und 8 gut zu erkennen ist, hat der Verstellkonus 280 insgesamt drei jeweils konusförmige Abschnitte 280', 280", 280"', wobei der vordere, antriebsabgewandte Abschnitt 280' und der hintere, antriebszugewandte Abschnitt 280'" jeweils mit den Kolbenabschnitten der Führungsleisten zusammenwirken, während der mittlere Abschnitt 280" mit den kolbenartigen Messdüsenträgern zusammenwirkt. Am dickeren Ende jedes der kegelförmigen Abschnitte ist eine zylindrische Führungsfläche vorgesehen, mit der der Verstellkonus innerhalb der axialen Durchgangsbohrung im Grundkörper 262 axial beweglich und radial im Wesentlichen spielfrei geführt wird. Über die Länge des Verstellkonus sind insgesamt vier solcher zylindrischer Führungsabschnitte vorgesehen.

Mithilfe der zylindrischen Ausführung der kolbenartigen Messdüsenträger und der kolbenartigen Abschnitte der Führungsleistenträger kann eine Verkippung der Führungsleisten und der Messdüsen bei der radialen Verstellung minimiert werden, wobei gleichzeitig in Radialrichtung eine leichtgängige Führung vorliegt.

Die Rückstellung der kolbenartigen Messdüsenträger in Richtung Verstellkonus wird über eine Rückstellfeder-Anordnung realisiert, die symmetrisch zur Bewegungsachse der Messdüsenträger wirkt. Hierzu ist auf jeder Seite des Messdüsenträgers eine Rückstellfeder 273-1, 273-2 in der Weise angeordnet, dass die Rückstellfedern insgesamt symmetrisch zur Bewegungsebene der Messdüsenträger wirken und somit kein Kippmoment auf den Messdüsenträger ausüben. Hierdurch ist eine gleichmäßige Bewegung ohne Verkanten der Kolben sichergestellt.

Auch bei den Führungsleisten wird als konstruktive Maßnahme ein Kippeffekt der Führungsleisten weitestgehend minimiert. Bereits über die Ausführung der Führungsleistenträger mit zwei verbundenen Kolben kann der Kippeffekt minimiert werden. Jedem Führungsleistenträger ist darüber hinaus eine symmetrisch wirkende Rückstellfeder-Anordnung zugeordnet, die symmetrisch wirkende Rückstellfedern 277-1, 277-2 auf gegenüberliegenden Seiten der Führungsleistenträger umfasst. Dadurch ist eine gleichmäßige radiale Bewegung ohne Verkanten der Führungsleistenträger möglich.

Für die Fertigstellung der kolbenartigen Messdüsenträger und/oder der Kolbenabschnitte der Führungsleistenträger ist keine spezielle Fertigungstechnologie notwendig. Diese zylindrischen Elemente können mit herkömmlichen Verfahren (z.B. als Drehteile) hergestellt und mittels Außen-Finishen so oberflächenbearbeitet werden, dass sie leicht in den entsprechenden Kolbenaufnahmebohrungen gleiten können. Die Innenflächen der Kolbenaufnahmebohrungen können hierzu mittels Honen so feinbearbeitet werden, dass sich insgesamt leicht laufende Gleitlager für die Radialbewegung der Messdüsen und der Führungsleisten ergeben. Zudem entsteht durch die Ausführung des Grundkörpers mit radialen Kolbenbohrungen für die Führung der Axialbewegung des Verstellkonus eine Durchgangsbohrung mit relativ großer Mantelfläche. Hierdurch wird eine verbesserte koaxiale Führung des Verstellkonus (Aufweitkonus) begünstigt.

Die axiale Verstellung des Verstellkonus wird mithilfe eines Gewindetriebs bewerkstelligt, der eine durch den Verstellantrieb (externer Servomotor) rotierend antreibbare Gewindespindel 284 und eine auf der Gewindespindel laufende Spindelmutter 286 aufweist. Im Unterschied zur ersten Ausführungsform ist die Spindelmutter 286 hier axial fest und drehfest am Grundkörper 262 befestigt. Die Gewindespindel und der Verstellkonus werden durch zwei Abschnitte eines einzigen Bauteils 290 gebildet, welches an seinem spindelseitigen Ende einen Sechskantabschnitt (als Kupplungsstruktur einer drehfesten Kupplung), daran anschließend einen in der Spindelmutter laufenden Gewindeabschnitt und daran anschließend einen Verstellkonus-Abschnitt mit drei Konusabschnitten und zylindrischen Führungsabschnitten aufweist. Der Gewindeabschnitt hat an seiner Außenseite ein Feingewinde, welches mit einem korrespondierenden Feingewinde im Inneren der Spindelmutter unmittelbar zusammenwirkt. Die Feingewinde sind dabei so ausgelegt, dass der Spindeltrieb im Bereich der Selbsthemmung arbeitet. Die Drehachse des Bauteils 290 ist koaxial mit der Längsmittelachse 264 des Grundkörpers. Eine Drehung des Bauteils bewirkt durch die Drehung des Gewindeabschnitts innerhalb der Spindelmutter eine axiale Verschiebung des Verstellkonus bei gleichzeitiger Drehung um seine Achse. Im Vergleich zu einer reinen Axialverschiebung des Verstellkonus kann hierdurch unter anderem ein relativ gleichmäßigerer Verschleiß an den Kontaktflächen der Konusabschnitte mit den Schrägflächen der Kolbenabschnitte erreicht werden, so dass die Präzision auch im Dauerbetrieb nach vielen Verstellvorgängen erhalten bleibt.

Die Präzision der Verstellung wird dadurch unterstützt, dass die Elemente des Gewindetriebs mithilfe einer koaxial zum Verstellkonus wirkenden, zwischen Spindelmutter und Verstellkonus wirkenden, das Bauteil umschließenden Spiraldruckfeder 285 in Axialrichtung vorgespannt werden, so dass jegliches Spiel aus der Gewindeverbindung herausgedrückt wird. Durch die Kombination dieser Maßnahmen wird eine praktisch spielfreie Übertragung der Drehbewegung auf Seiten des Verstellantriebs in eine axiale Vorschubbewegung des Verstellkonus sichergestellt.

Der Messdorn enthält weitere konstruktive Maßnahmen zur Verbesserung der Messung. Zur Beseitigung eventueller Schmutzpartikel in der zu vermessenden Bohrung ist ein innenliegendes, von dem Messsystem unabhängiges Blasluftsystem vorgesehen, mit dessen Hilfe die Bohrung durch einen um 360° umlaufenden Luftspalt beim Einführen des Messdorns in die Bohrung gereinigt wird. Das Bauteil 290 hat hierzu eine mittige, von der Spindelseite bis fast zum spindelfernen Ende durchgehende Längsbohrung 292, die im Bereich zwischen den Konusabschnitten Querbohrungen aufweist, die in eine Ringnut 295 im spindelfernen Endbereich des Grundkörpers münden.

Zudem kann durch den Einsatz eines integrierten thermischen Messsensors (Temperatursensors) eine Messung der Temperatur im Messbereich vorgenommen werden, um die Temperaturbedingungen beim Messen zu überwachen und gegebenenfalls die thermischen Voraussetzungen für den Messvorgang zu regeln.

Die Messeinheit ist hier als Stand-Alone-System dargestellt. Sie kann auch in eine Bearbeitungsmaschine als Messstation integriert sein.

Bei den bildlich dargestellten Ausführungsbeispielen und der beanspruchten Messeinheit hat der Messdorn Messsensoren mit Messdüsen eines pneumatischen Messsystems an den Außenseiten von radial verschiebbaren Messdüsenträgern. Obwohl nicht beansprucht, lässt das mechanische Grundprinzip des Messdorns sich auch in Verbindungen mit anderen geeigneten Messprinzipien und Sensoren nutzen. Beispielsweise können taktile, optische, induktive oder kapazitive Messsensoren an radial verschiebbaren Messsensorträgern vorgesehen sein. Die Erfindung ist im Anspruch 1 definiert.

## Patentansprüche

1. Messeinheit (100) zum Vermessen der Geometrie einer Bohrung (194), insbesondere zum Messen des Innendurchmessers einer Bohrung nach einer Honbearbeitung, mit:
einem in die Bohrung (194) einführbaren pneumatischen Messdorn (160, 260), der ein Paar von Messdüsen (172-1 bis 172-4, 272-1 bis 272-4) aufweist, die bezogen auf eine Längsmittelachse (164) des Messdorns in einem diametralen Abstand (175) zueinander angeordnet sind, und
einer mittels eines Verstellantriebs (120) betätigbaren Verstelleinrichtung zur stufenlosen Verstellung des diametralen Abstandes der Messdüsen, wobei
jede der Messdüsen (172-1 bis 172-4) an einem gesonderten Messdüsenträger (170-1 - 170-4, 270-1 - 270-4) angeordnet ist, der in einem Grundkörper (162, 262) des Messdorns radial zur Längsmittelachse (164, 264) verschiebbar gelagert und durch Aktivierung des Verstellantriebs mittels der Verstelleinrichtung radial verschiebbar ist, und
die Verstelleinrichtung einen axial verstellbaren Verstellkonus (180, 280) mit mindestens einem Konusabschnitt aufweist und die Messdüsenträger (170-1 - 170-4, 270-1 - 270-4) an einer dem Verstellkonus zugewandten Innenseite Schrägflächen aufweisen, die mit dem Konusabschnitt nach Art eines Keilantriebs zusammenwirken,
**dadurch gekennzeichnet, dass**
die Verstelleinrichtung einen Gewindetrieb mit einer durch den Verstellantrieb rotierend antreibbaren Gewindespindel (184, 284) und einer auf der Gewindespindel laufenden Spindelmutter (186) aufweist.

2. Messeinheit nach Anspruch 1, **dadurch gekennzeichnet, dass** die Spindelmutter (184) relativ zum Grundkörper (162) beweglich und der Verstellkonus (180) axial verschiebbar ist oder dadurch, dass die Spindelmutter (284) fest mit dem Grundkörper (262) verbunden und der Verstellkonus (280) gegenüber der Spindelmutter drehbar und axial beweglich ist, wobei vorzugsweise die Spindel und der Verstellkonus durch dasselbe Bauteil (290) gebildet werden.

3. Messeinheit nach Anspruch 1 oder 2, **gekennzeichnet durch** eine Feder (185), die auf die Spindelmutter (186) und/oder den Verstellkonus eine parallel zur Gewindespindel gerichtete Federkraft ausübt, wobei die Feder vorzugsweise als eine Druckfeder ausgelegt ist, die die Gewindespindel umschließt.

4. Messeinheit nach einem der vorhergehenden Ansprüche, **dadurch gekennzeichnet, dass** die Gewindespindel (284) ein Feingewinde aufweist, das mit einem Feingewinde der Spindelmutter (286) im Bereich der Selbsthemmung zusammenwirkt.

5. Messeinheit nach einem der vorhergehenden Ansprüche, **dadurch gekennzeichnet, dass** jedem Messdüsenträger mindestens eine als Druckfeder ausgelegte Rückstellfeder (176-1 - 176-4, 273-1, 273-2) zugeordnet ist, die den zugeordneten Messdüsenträger in Richtung des Verstellkonus vorspannt, wobei vorzugsweise eine zu einer Bewegungsrichtung des Messdüsenträgers symmetrische Rückstellfeder-Anordnung vorgesehen ist, insbesondere mit Rückstellfedern (273-1, 273-2) an gegenüberliegenden Seites des Messdüsenträgers.

6. Messeinheit nach einem der vorhergehenden Ansprüche, **dadurch gekennzeichnet, dass** der Verstellantrieb einen Servomotor (120) aufweist, der vorzugsweise mit einer Messeinrichtung zur Erfassung der Rotorposition des Servomotors ausgestattet ist, wobei die Messeinrichtung einen Drehgeber aufweist, der ein Gebersignal erzeugt, welches an eine Steuerung des Verstellantriebs übertragbar ist.

7. Messeinheit nach einem der vorhergehenden Ansprüche, **gekennzeichnet durch** ein Führungssystem mit mehreren um den Umfang des Messdorns (260) verteilten, radial zustellbaren Führungsleisten (276-1, 276-3), die als von den Messdüsenträgern (270-1) gesonderte Führungsleisten ausgelegt sind, wobei die Führungsleisten vorzugsweise in Umfangsrichtung zwischen Messdüsenträgern angeordnet sind.

8. Messeinheit nach Anspruch 7, **dadurch gekennzeichnet, dass** die Führungsleisten (276-1, 276-3) an Führungsleistenträgern (275-1, 275-3) befestigt sind, die an einer dem Verstellkonus (280) zugewandten Innenseite Schrägflächen aufweisen, die mit einem Konusabschnitt des Verstellkonus nach Art eines Keilantriebs zusammenwirken, wobei vorzugsweise jeder der Führungsleistenträger zwei mit axialem Abstand zueinander angeordnete Schrägflächen aufweist, die mit axial zueinander versetzten Konusabschnitten (280', 280"') des Verstellkonus zusammenwirken.

9. Messeinheit nach Anspruch 7 oder 8, **dadurch gekennzeichnet, dass** jeder der Führungsleistenträger (275-1) mindestens einen zylindrischen Kolbenabschnitt aufweist, der im Wesentlichen spielfrei in einer zylindrischen Kolbenaufnahmebohrung im Grundkörper (262) des Messdorns geführt ist, wobei vorzugsweise zwei mit axialem Abstand zueinander angeordnete, mechanisch verbundene Kolbenabschnitte (277) vorgesehen sind.

10. Messeinheit nach einem der vorhergehenden Ansprüche, **dadurch gekennzeichnet, dass** die Messdüsenträger (270-1 bis 270-4) teilweise oder vollständig als zylindrische Kolben ausgeführt sind, die im Wesentlichen spielfrei in zylindrischen Kolbenaufnahmebohrungen im Grundkörper (262) des Messdorns geführt sind.

11. Messeinheit nach einem der vorhergehenden Ansprüche, **gekennzeichnet durch** ein von dem Messsystem unabhängiges, innenliegendes Blasluftsystem mit Luftkanälen, die von einem Blasluftanschluss zu einer oder mehreren Blasluftdüsen am Umfang des Messdorns führen.

12. Messeinheit nach einem der vorhergehenden Ansprüche, **gekennzeichnet durch** ein innenliegendes Kühlsystem mit Fluidkanälen, die von einem Fluidanschluss zu Kühlfluid-Auslassöffnungen am Umfang des Messdorns führen.

13. Messeinheit nach einem der vorhergehenden Ansprüche, **gekennzeichnet durch** einen in den Messdorn integrierten Temperatursensor.

14. Messeinheit nach einem der vorhergehenden Ansprüche, **gekennzeichnet durch** eine mit dem Messdorn (160, 260) verbundene rohrförmige Verlängerungsstange (130, 230) mit einem im Inneren der Verlängerungsstange angeordneten, drehbaren Verstellelement (135), das über eine drehbare Kupplung (188) mit der Gewindespindel (184) des Gewindetriebs verbunden ist, wobei zwischen der Verlängerungsstange und dem Messdorn (160) eine Schwimmkopfanordnung (140) angeordnet ist.

15. Messeinheit nach Anspruch 14, **dadurch gekennzeichnet, dass** das Verstellelement (135) an einem dem Messdorn abgewandten Ende ein Antriebselement (137) aufweist, das in der Verlängerungsstange drehbar gelagert ist, an einem dem Messdorn (160) zugewandten Ende ein Abtriebselement (139) vorgesehen ist, das in einem mit dem Messdorn gegenüber der Verlängerungsstange schwimmend gelagerten Element der Schwimmkopfanordnung (140) drehbar gelagert ist, und zwischen dem Antriebselement (137) und dem Abtreibselement (139) ein Zwischenstück (134) angeordnet ist, wobei zwischen dem Antriebselement und dem Zwischenstück ein erstes Gelenk (136) und zwischen dem Zwischenstück und dem Abtriebselement ein zweites Gelenk (138) angeordnet ist. -------------

## Claims

1. Measuring unit (100) for measuring the geometry of a bore (194), in particular for measuring the internal diameter of a bore following honing machining, comprising:
a pneumatic plug gauge (160, 260) which can be inserted into the bore (194) and which has a pair of measuring nozzles (172-1 to 172-4, 272-1 to 272-4) which, in relation to a central longitudinal axis (164) of the plug gauge, are arranged with a diametric spacing (175) from each other, and
an adjusting device that can be actuated by means of an adjusting drive (120) for the continuous adjustment of the diametric spacing of the measuring nozzles,
each of the measuring nozzles (172-1 to 172-4) being arranged on a separate measuring nozzle carrier (170-1 - 170-4, 270-1 - 270-4), which is mounted in a base body (162, 262) of the plug gauge such that it can be displaced radially with respect to the central longitudinal axis (164, 264) and can be displaced radially by means of the adjusting device by activating the adjusting drive, and
the adjusting device having an axially adjustable adjusting cone (180, 280) with at least one conical section, and the measuring nozzle carriers (170-1 - 170-4, 270-1 - 270-4) having, on an inner side facing the adjusting cone, inclined faces which interact with the conical section in the manner of a wedge drive,
**characterized in that**
the adjusting device has a screw drive with a threaded spindle (184, 284) that can be driven in rotation by the adjusting drive, and a spindle nut (186) running on the threaded spindle.

2. Measuring unit according to Claim 1, **characterized in that** the spindle nut (184) can be moved relative to the base body (162) and the adjusting cone (180) can be displaced axially, or **in that** the spindle nut (284) is firmly connected to the base body (262) and the adjusting cone (280) can be rotated with respect to the spindle nut and moved axially, wherein preferably the spindle and the adjusting cone are formed by the same component (290).

3. Measuring unit according to Claim 1 or 2, **characterized by** a spring (185) which exerts on the spindle nut (186) and/or the adjusting cone a spring force directed parallel to the threaded spindle, wherein preferably the spring is designed as a compression spring which encloses the threaded spindle.

4. Measuring unit according to any of the preceding claims, **characterized in that** the threaded spindle (284) has a fine thread which interacts with a fine thread of the spindle nut (286) within in the self-locking range.

5. Measuring unit according to any of the preceding claims, **characterized in that** each measuring nozzle carrier is assigned at least one return spring (176-1 - 176-4, 273-1, 273-2) designed as a compression spring, which preloads the associated measuring nozzle carrier in the direction of the adjusting cone, wherein preferably a return spring arrangement being symmetrically with respect to the direction of movement of the measuring nozzle carrier is provided, in particular comprising return springs (273-1, 273-2) on opposite sides of the measuring nozzle carrier.

6. Measuring unit according to any of the preceding claims, **characterized in that** the adjusting drive has a servo motor (120), which is preferably equipped with a measuring device for detecting the rotor position of the servo motor, wherein the measuring device has a rotary encoder which generates an encoder signal which can be transmitted to a control system of the adjusting drive.

7. Measuring unit according to any of the preceding claims, **characterized by** a guide system having a plurality of guide strips (276-1, 276-3) which are distributed around the circumference of the plug gauge (260) and can be adjusted radially, which are designed as guide strips that are separate from the measuring nozzle carriers (270-1), wherein the guide strips preferably are arranged in the circumferential direction between measuring nozzle carriers.

8. Measuring unit according to Claim 7, **characterized in that** the guide strips (276-1, 276-3) are fixed to guide strip carriers (275-1, 275-3) which, on an inner side facing the adjusting cone (280), have inclined faces which interact with a conical section of the adjusting cone in the manner of a wedge drive, wherein preferably each of the guide strip carriers has two inclined faces arranged with an axial spacing from each other, which interact with conical sections (280', 280"') of the adjusting cone that are offset axially in relation to one another.

9. Measuring unit according to Claim 7 or 8, **characterized in that** each of the guide strip carriers (275-1) has at least one cylindrical piston section, which is guided substantially without play in a cylindrical piston receiving bore in the base body (262) of the plug gauge, wherein preferably two mechanically connected piston sections (277) arranged with axial spacing from each other are provided.

10. Measuring unit according to any of the preceding claims, **characterized in that** the measuring nozzle carriers (270-1 to 270-4) are designed partially or completely as cylindrical pistons, which are guided substantially without play in cylindrical piston receiving bores in the base body (262) of the plug gauge.

11. Measuring unit according to any of the preceding claims, **characterized by** an internal blow air system that is independent of the measuring system and has air ducts which lead from a blow air connection to one or more blow air nozzles on the circumference of the plug gauge.

12. Measuring unit according to any of the preceding claims, **characterized by** an internal cooling system having fluid ducts which lead from a fluid connection to cooling fluid outlet openings on the circumference of the plug gauge.

13. Measuring unit according to any of the preceding claims, **characterized by** a temperature sensor integrated into the plug gauge.

14. Measuring unit according to any of the preceding claims, **characterized by** a tubular extension rod (130, 230) connected to the plug gauge (160, 260), which has a rotatable adjusting element (135) that is arranged in the interior of the extension rod and is connected via a rotatable coupling (188) to the threaded spindle (184) of the screw drive, wherein a floating head arrangement (140) is arranged between the extension rod and the plug gauge (160).

15. Measuring unit according to claim 14, **characterized in that** the adjusting element (135) has, at an end facing away from the plug gauge, a drive element (137) which is rotatably mounted in the extension rod, at an end facing the plug gauge (160) there is provided an output element (139) which is rotatably mounted in an element of the floating head arrangement (140) that is mounted so as to float with respect to the extension rod together with the plug gauge, and an intermediate piece (134) is arranged between the drive element (137) and the output element (139), wherein a first joint (136) is arranged between the drive element and the intermediate piece, and a second joint (138) is arranged between the intermediate piece and the output element.

## Revendications

1. Unité de mesure (100) destinée à mesurer la géométrie d'un alésage (194), notamment à mesurer le diamètre intérieur d'un alésage après un traitement de rodage, comportant :
un mandrin de mesure (160, 260) pneumatique pouvant être introduit dans l'alésage (194) et qui comporte une paire de buses de mesure (172-1 à 172-4, 272-1 à 272-4) disposées de manière espacée l'une de l'autre d'une distance diamétrale (175) par rapport à un axe central longitudinal (164), et
un dispositif de réglage pouvant être actionné au moyen d'un entraînement de réglage (120) pour régler en continu la distance diamétrale des buses de mesure,
dans laquelle
chacune des buses de mesure (172-1 à 172-4) est disposée sur un support de buse de mesure (170-1 - 170-4, 270-1 - 270-4) séparé qui est monté dans un corps de base (162, 262) du mandrin de mesure de manière à ce qu'il puisse être déplacé radialement par rapport à l'axe central longitudinal (164, 264) et à ce qu'il puisse être déplacé radialement au moyen du dispositif de réglage par activation de l'entraînement de réglage, et
le dispositif de réglage comporte un cône de réglage réglable axialement (180, 280) muni d'au moins une section de cône et les porte-buses de mesure (170-1 - 170-4, 270-1 - 270-4) présentent, sur un côté intérieur tourné vers le cône de réglage, des surfaces inclinées qui interagissent avec la section de cône à la manière d'un entraînement en coin,
**caractérisée en ce que** le dispositif de réglage comporte un entraînement fileté muni d'une broche filetée (184, 284), qui peut être entraînée en rotation par l'entraînement de réglage, et un écrou de broche (186) s'étendant sur la broche filetée.

2. Unité de mesure selon la revendication 1, **caractérisée en ce que** l'écrou de broche (184) est mobile par rapport au corps de base (162) et le cône de réglage (180) peut être déplacé axialement ou **en ce que** l'écrou de broche (284) est relié de manière fixe au corps de base (262) et le cône de réglage (280) est mobile en rotation et axialement par rapport à l'écrou de broche, dans laquelle la broche et le cône de réglage sont de préférence formés par un même composant (290) .

3. Unité de mesure selon la revendication 1 ou 2, **caractérisée par** un ressort (185) qui exerce une force de ressort dirigée parallèlement à la broche filetée sur l'écrou de broche (186) et/ou le cône de réglage, dans laquelle le ressort est de préférence réalisé sous la forme d'un ressort de compression entourant la broche filetée.

4. Unité de mesure selon l'une des revendications précédentes, **caractérisée en ce que** la broche filetée (284) présente un filetage fin qui coopère avec un filetage fin de l'écrou de broche (286) dans le domaine des dispositifs autobloquants.

5. Unité de mesure selon l'une des revendications précédentes, **caractérisée en ce qu'**au moins un ressort de rappel (176-1 - 176-4, 273-1, 273-2), qui est réalisé sous la forme d'un ressort de compression et sollicite le porte-buses de mesure associé dans la direction du cône de réglage, est associé à chaque porte-buses de mesure, dans laquelle il est de préférence prévu un système de ressorts de rappel symétrique par rapport à une direction de déplacement du porte-buses de mesure, comportant en particulier des ressorts de rappel (273-1, 273-2) sur les côtés opposés du porte-buses de mesure.

6. Unité de mesure selon l'une des revendications précédentes, **caractérisé en ce que** l'entraînement de réglage comprend un servomoteur (120) qui est de préférence équipé d'un dispositif de mesure destiné à détecter la position du rotor du servomoteur, dans laquelle le dispositif de mesure comporte un codeur rotatif générant un signal de codeur qui peut être transmis à une commande de l'entraînement de réglage.

7. Unité de mesure selon l'une des revendications précédentes, **caractérisée par** un système de guidage comportant plusieurs barres de guidage (276-1, 276-3) réglables radialement, qui sont réparties sur le pourtour du mandrin de mesure (260) et qui sont réalisées sous la forme de barres de guidage indépendantes du porte-buses de mesure (270-1), dans laquelle les barres de guidage sont de préférence disposées dans la direction circonférentielle entre des porte-buses de mesure.

8. Unité de mesure selon la revendication 7, **caractérisée en ce que** les barres de guidage (276-1, 276-3) sont fixées sur des supports de barres de guidage (275-1, 275-3) qui présentent, sur un côté intérieur tourné vers le cône de réglage (280), des surfaces inclinées qui interagissent avec une section de cône du cône de réglage à la manière d'un entraînement en coin, dans laquelle chacun des supports de barres de guidage présente de préférence deux surfaces inclinées disposées de manière axialement espacée l'une de l'autre et qui coopèrent avec des sections de cône (280', 280"') axialement décalées l'une par rapport à l'autre du cône de réglage.

9. Unité de mesure selon la revendication 7 ou 8, **caractérisée en ce que** chacun des supports de barres de guidage (275-1) présente au moins une section de piston cylindrique qui est guidée sensiblement sans jeu dans un alésage de réception de piston cylindrique ménagé dans le corps de base (262) du mandrin de mesure, dans laquelle il est de préférence prévu deux sections de piston (277) reliées mécaniquement et disposées de manière axialement espacée l'une de l'autre.

10. Unité de mesure selon l'une des revendications précédentes, **caractérisée en ce que** les porte-buses de mesure (270-1 à 270-4) sont réalisés partiellement ou en totalité sous la forme de pistons cylindriques qui sont guidés sensiblement sans jeu dans des alésages de réception de piston cylindrique ménagés dans le corps de base (262) du mandrin de mesure.

11. Unité de mesure selon l'une des revendications précédentes, **caractérisée par** un système interne d'air de soufflage indépendant du système de mesure, comportant des conduits d'air allant d'un raccord d'air de soufflage à une ou plusieurs buses d'air de soufflage situées à la périphérie du mandrin de mesure.

12. Unité de mesure selon l'une des revendications précédentes, **caractérisée par** un système de refroidissement interne comportant des conduits de fluide allant d'un raccord de fluide à des ouvertures de sortie de fluide de refroidissement situées à la périphérie du mandrin de mesure.

13. Unité de mesure selon l'une des revendications précédentes, **caractérisée par** un capteur de température intégré dans le mandrin de mesure.

14. Unité de mesure selon l'une des revendications précédentes, **caractérisée par** une tige de prolongation tubulaire (130, 230) reliée au mandrin de mesure (160, 260) et comportant un élément de réglage rotatif (135) disposé à l'intérieur de la tige de prolongation et relié par un accouplement rotatif (188) à la broche filetée (184) de l'entraînement fileté, dans laquelle un système à tête flottante (140) est disposé entre la tige de prolongation et le mandrin de mesure (160).

15. Unité de mesure selon la revendication 14, **caractérisée en ce que** l'élément de réglage (135) présente à une extrémité éloignée du mandrin de mesure un élément d'entraînement (137) qui est monté rotatif dans la tige de prolongation, **en ce qu'**il est prévu un élément mené (139) à une extrémité tournée vers le mandrin de mesure (160), qui est monté rotatif dans un élément du système à tête flottante (140), lequel élément est monté de manière à flotter par rapport à la tige de prolongation en association avec le mandrin de mesure, et **en ce qu'**une pièce intermédiaire (134) est disposée entre l'élément d'entraînement (137) et l'élément mené (139), dans laquelle une première articulation (136) est disposée entre l'élément d'entraînement et la pièce intermédiaire et une seconde articulation (138) est disposée entre la pièce intermédiaire et l'élément mené.
